# FASCICULE DE BREVET EUROPEEN

(11) **EP 2 536 560 B1**
(45) Date de publication et mention de la délivrance du brevet: **09.04.2014**
(21) Numéro de dépôt: 11703687.1
(22) Date de dépôt: 15.02.2011
(51) Int. Cl.: B32B 17/10, C03C 17/00, F21K 99/00, G09G 3/32

(54) **PANNEAU A MOTIF CONDUCTEUR AMELIORE**
PANEEL MIT VERBESSERTEM LEITERBAHNMUSTER
PANEL WITH IMPROVED PATTERN OF CONDUCTORS

(30) Priorité: 16.02.2010 BE 201000089
(43) Date de publication de la demande: 26.12.2012
(73) Titulaire: AGC Glass Europe, 1170 Bruxelles (Watermael-Boitsfort) (BE)
(72) Inventeur: LUIJKX, Antoine, B-6040 Jumet (BE); SAHYOUN, Xavier, B-6040 Jumet (BE)
(74) Mandataire: Bayot, Daisy
(86) Numéro de dépôt international: PCT/EP2011/052235
(87) Numéro de publication internationale: WO 2011/101354

(56) Documents cités:
- EP-A1- 1 956 580
- EP-A1- 1 970 195
- WO-A1-2008/126003
- WO-A1-2009/050195
- WO-A2-2009/016561

## Description

### DOMAINE TECHNIQUE DE L'INVENTION

L'invention se rapporte à l'alimentation électrique d'un panneau comprenant :
- un premier substrat en verre pourvu d'un motif conducteur fait d'un matériau optiquement transparent et électriquement conducteur, le motif conducteur étant muni d'une première et d'une deuxième colonne adjacentes l'une à l'autre, et comprenant une série de domaines conducteurs mutuellement isolés électriquement; dans lequel le motif conducteur est tel qu'un premier et un second domaine conducteur sont situés dans la première colonne et un domaine conducteur supplémentaire est arrangé dans la deuxième colonne adjacent au premier domaine conducteur, et est en opération à un potentiel plus bas que le second domaine conducteur, le second domaine conducteur étant lui-même en opération à un potentiel plus bas que le premier domaine conducteur,
dans lequel au moins une zone tampon conductrice est présente entre ledit premier domaine conducteur et ledit domaine conducteur supplémentaire, ladite zone tampon étant électriquement isolée dudit premier domaine conducteur et dudit domaine conducteur supplémentaire, la zone tampon conductrice étant en opération à un potentiel intermédiaire compris entre le potentiel du premier domaine conducteur et le potentiel du domaine conducteur supplémentaire.

L'invention concerne en outre un substrat de verre pour utilisation dans un tel panneau, et l'utilisation dudit panneau.

### ETAT DE LA TECHNIQUE DE L'INVENTION

Un tel dispositif est connu de WO2009/003525 A1. Le panneau peut être un vitrage et / ou un panneau d'éclairage. Il peut être une étagère, une cloison ou un panneau de revêtement mural. Le panneau est en outre fourni avec une première et une deuxième barres omnibus (ou busbars) espacées. Les barres omnibus s'étendent le long du même bord du panneau, et sont par exemple en cuivre. La série de domaines conducteurs suit un chemin substantiellement en forme de U entre une première et une seconde barre omnibus. Elle débute ainsi dans la première colonne et se termine dans la deuxième colonne. La série de diodes électroluminescentes (LEDs) comprend au moins 4 LEDs couplées en série. Le dispositif comprend en outre un deuxième substrat de verre ou feuille de verre. Les deux substrats en verre sont feuilletés ensemble avec un intercalaire en polymère aplanissant l'assemblage des LEDs et du premier substrat de verre.

L'intercalaire en polymère comprend une ou plusieurs feuilles en polyvinylbutyral (PVB) ou en résine, par exemple en EVA. L'intercalaire polymère peut être substantiellement optiquement transparent. Il peut être neutre ou de couleur claire ou il peut être tinté dans la masse. Le panneau peut incorporer globalement au moins 30, 50, 100 ou 200 LEDs. Le substrat de verre a de manière adéquate une épaisseur de l'ordre de 2,5 mm à 10 mm.

Le matériau électriquement conducteur est par exemple une pile de revêtements déposés par projection avec une épaisseur de l'ordre de 5 nm à 300 nm, et par exemple comprenant de l'ITO ou de l'argent. Alternativement, le matériau électriquement conducteur est une couche pyrolytique, notamment une couche déposée par dépôt chimique en phase vapeur, qui peut avoir une épaisseur de l'ordre de 100 nm à 5000 nm. Un exemple d'un matériau de ces couches pyrolytiques est l'oxyde d'étain dopé au fluor ou à l'antimoine. Dans une autre alternative, l'utilisation peut être faite de conducteurs transparents organiques, tels que le poly-3 ,4-ethylenedioxythiophene-poly(styrène sulfonate) de sodium, généralement dénommé PEDOT-PSS. La résistance de couche peut se situer dans la fourchette allant de 1 à 6 ohms / carré ou dans la fourchette allant de 2 à 20 ohms / carré.

Les motifs sont définis en faisant des interruptions, par exemple en masquant pendant le dépôt de la couche de revêtement, par ablation, par exemple par ablation laser, par gravure chimique, abrasion ou découpe.

Il est connu que le matériau conducteur tend à interagir avec l'intercalaire en polymère, et notamment sous un champ électrique élevé et / ou à haute température.

L'interaction est caractérisée par l'apparition d'une coloration brune sur les domaines conducteurs concernés. La coloration brune tend à apparaître après une certaine période d'utilisation et en particulier à l'électrode négative de la LED. Le choix du matériau de l'intercalaire s'avère avoir un impact sur la durée de la période précédant le moment où la coloration brune commence à être visible. La coloration brune peut être due à l'effet de la diffusion de certains ions tels que les alcalins et les ions de métaux alcalins terreux, par exemple le potassium et le calcium sous l'influence du champ électrique. En plus d'être visible, la coloration brune conduit à une augmentation de la résistivité qui limite les performances du panneau.

Afin de résoudre ce problème, l'art antérieur a proposé d'utiliser du courant alternatif au lieu de courant continu. Ceci limiterait en effet l'intensité du champ, mais les diodes électroluminescentes sont des éléments qui, par nature, ont besoin d'être alimentée par un courant continu. On pourrait ainsi combiner une LED avec une diode protectrice à polarisation inverse, mais cela conduit à une résistance supplémentaire, à des coûts liés aux composants supplémentaires et à une commande plus difficile du panneau.

### RESUME DE L'INVENTION

Un objet de la présente invention est par conséquent de fournir une solution alternative au problème qui n'entraîne pas de coûts de composants supplémentaires.

Cet objet est réalisé dans un procédé d'alimentation électrique d'un panneau comprenant :
- un premier substrat en verre pourvu d'un motif conducteur fait d'un matériau optiquement transparent et électriquement conducteur, le motif conducteur étant muni d'une première et d'une deuxième colonne adjacentes l'une à l'autre, et comprenant une série de domaines conducteurs mutuellement isolés électriquement;
dans lequel le motif conducteur est tel qu'un premier et un second domaine conducteur sont situés dans la première colonne et un domaine conducteur supplémentaire est arrangé dans la deuxième colonne adjacent au premier domaine conducteur,
au moins une zone tampon conductrice étant présente entre ledit premier domaine conducteur et ledit domaine conducteur supplémentaire, ladite zone tampon étant électriquement isolée dudit premier domaine conducteur et dudit domaine conducteur supplémentaire,

Selon l'invention, le domaine conducteur supplémentaire est à un potentiel plus bas que le second domaine conducteur, le second domaine conducteur étant lui-même en opération à un potentiel plus bas que le premier domaine conducteur et la zone tampon conductrice est en opération à un potentiel intermédiaire compris entre le potentiel du premier domaine conducteur et le potentiel du domaine conducteur supplémentaire.

L'aménagement de zones tampons conductrice s'avère aboutir à une amélioration majeure de la durée de la période antérieure à l'apparition de tout brunissement. Il est d'ailleurs bénéfique que de telles zones tampons puissent être définies dans le même motif, sans aucun frais supplémentaire.

Avantageusement, le panneau comprend en outre une série de diodes électroluminescentes ayant chacune une première et une seconde plage de contact et étant attachées au panneau de verre et commandées par l'intermédiaire de la série de domaines conducteurs du motif conducteur, la première plage de contact d'une diode électroluminescente étant connectée au premier domaine conducteur de la série et la seconde plage de contact de ladite diode électroluminescente étant connectée au second domaine conducteur de la série, la diode électroluminescente constituant ainsi un pont entre le premier domaine conducteur et le second domaine conducteur.

Bien entendu, l'invention s'applique également au cas d'un panneau dans lequel des séries d'autres composants électroniques ou électriques sont connectées électriquement aux domaines conducteurs du motif conducteur, par exemple des résistances, des capteurs, ... L'invention s'applique également au cas d'un panneau dans lequel aucun composant électronique ou électrique est connecté électriquement aux domaines conducteurs du motif conducteur, par exemple dans le cas où les domaines conducteurs du motif conducteur sont utilisés comme éléments chauffants sur un panneau de vitrage. L'invention s'applique également au cas d'un panneau dans lequel un même et unique composant est connecté électriquement aux domaines conducteurs du motif conducteur, par exemple dans le cas d'une OLED (pour Organic Light Emiting Diode) : la couche de matériau organique étant directement déposée sur le substrat en verre pourvu du motif conducteur ou dans le cas d'un panneau comprenant une couche d'un matériau dont l'opacité est contrôlable électriquement, ladite couche étant directement déposée sur le substrat en verre pourvu du motif conducteur.

Avantageusement, une telle zone tampon fait partie du second domaine conducteur. Cette mesure diminue le nombre des zones et domaines indépendants, ce que donne un plus grand contrôle sûr les voltages appliqués. Dans une bonne réalisation, le premier domaine est pourvu de quatre faces, deux paires de deux faces opposées. Le second domaine se trouve à au moins une face de chaque paire. Préférentiellement, le second domaine se trouve aux deux faces d'une paire, c'est-à-dire, le second domaine entoure pour trois-quart le premier domaine.

Dans une réalisation supplémentaire le second domaine continue jusqu'à un connecteur qui apporte l'alimentation (e.g. busbar). Cette réalisation offre une sorte de chemin ou zone protective le long de l'interface entre la première et la deuxième colonne. Particulièrement, dans la réalisation à une série de domaines, un nombre de tels chemins est localisée adjacent l'un à l'autre. Cela donne la possibilité d'envoyer un courant directement du connecteur (busbar) vers un domaine conducteur spécifique.

Avantageusement, une pluralité de zones tampons est présente.

Avantageusement, une différence de voltage entre toute paire de domaines conducteurs adjacents dans le motif est dans une plage prédéfinie.

Avantageusement, ladite différence de voltage est constante.

Selon un mode de réalisation avantageux, la série de domaines conducteurs s'étend de la première colonne à la seconde colonne, de telle manière que le conducteur supplémentaire fait partie de ladite série.

Avantageusement, un diélectrique est présent au dessus du motif conducteur, par ce fait définissant une capacité en parallèle à au moins une diode électroluminescente.

Selon un mode de réalisation avantageux, les domaines conducteurs sont mutuellement isolés au moyen de lignes de largeur constante.

Avantageusement, le panneau est un panneau de verre feuilleté obtenu par feuilletage du premier substrat et d'un second substrat de verre via au moins un intercalaire thermoplastique de tel sorte que les diodes électroluminescentes sont encapsulées dans ledit au moins un intercalaire thermoplastique.

Ainsi, la présente invention propose une solution alternative aux solution de l'art permettant de retarder la diffusion des ions dans l'intercalaire thermoplastique, la coloration brunâtre et donc l'augmentation locale de la résistivité de la couche (qui ne permet plus une utilisation normale du panneau) dans un panneau de verre feuilleté intégrant des composants électriques et/ou électroniques.

### BREVE RESCRIPTION DES FIGURES

L'invention sera plus avant expliquée en faisant références aux figures, dans lesquelles:
Fig. 1 est une vue en coupe d'un panneau de verre feuilleté intégrant des LEDs;
Fig. 2 représente un circuit électrique d'alimentation des LEDs classique tel que décrit dans la demande de brevet n° WO2009003525A1 et notamment dans sa figure 2;
Fig. 3 montre un diagramme généralisée de l'invention, dans une vue d'au-dessus ; à gauche, sans composant électronique ; à droite, avec composant électronique;
Fig. 4 montre la Figure 3 aux lignes équipotentielles;
Fig. 5 montre une réalisation d'amenée de potentiel selon l'invention près de la zone de jonction entre le premier domaine et le domaine supplementaire;
Fig. 6 est une vue d'au-dessus d'un circuit électrique selon l'invention, et
Fig. 7 représente un panneau à LEDs, dans une réalisation d'un circuit "en U".

### DESCRIPTION DE L'INVENTION

Les figures sont de purement schématiques et ne sont pas dessinées à l'échelle. Il est observé pour plus de clarté que des nombres de référence identiques sont utilisés dans les différentes figures pour faire référence à des éléments identiques ou similaires.

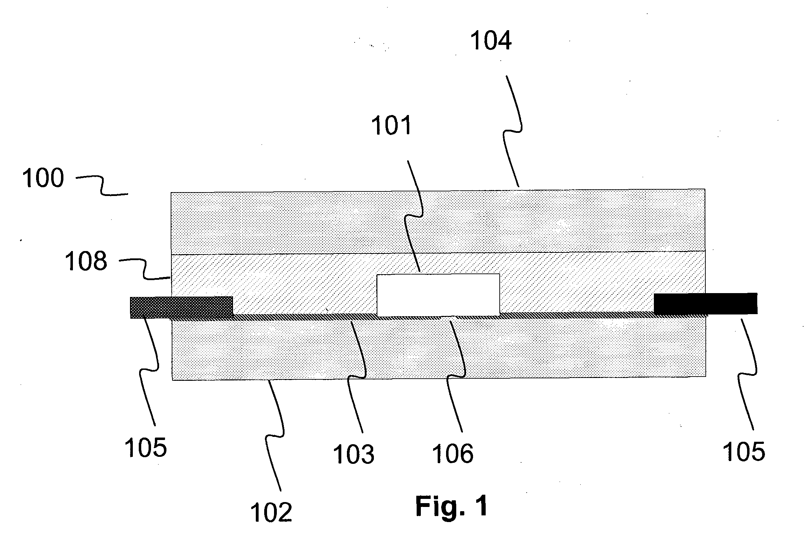

On se place dans la suite dans le cadre d'un panneau 100 de verre feuilleté intégrant des diodes électroluminescentes 101 (ci-après LEDs pour « Light emitting diodes ») tel que celui de la figure 1 (où une vue en coupe du panneau est proposée). Ce panneau est réalisé suivant la séquence d'étapes suivantes :
- découpe à dimensions (par exemple 500mmx500mm) d'une première feuille de verre 102 (ou premier substrat en verre) recouverte d'une couche conductrice de l'électricité transparente 103, par exemple une feuille de Planibel G commercialisée par la société AGC Glass Europe;
- réalisation du circuit électrique d'alimentation 106 des LEDs 101 (ou motif conducteur) par attaque sélective sous forme de lignes de la couche conductrice (ou patterning de la couche conductrice) au moyen par exemple d'un faisceau laser qui brûle localement la couche conductrice afin de créer des lignes isolantes, e.g. d'une centaine de micron d'épaisseur. Le résultat de cette étape selon l'invention est détaillé ci-après;
- dépôt et solidarisation (au moyen par exemple d'une colle conductrice) de LEDs, par exemple grâce à une machine automatique de type « Pick & Place» (telle que décrite dans la demande de brevet n°WO2009100769A1), sur la première feuille de verre portant le circuit d'alimentation des LEDs, l'électrode positive (ou plage de contact positive) et l'électrode négative (ou plage de contact négative) de la LED étant collées respectivement sur des électrodes positive et négative (ou domaines conducteurs positif et négatif) réalisées sur le circuit d'alimentation des LEDs ;
- applications de connecteurs 105 (pour l'anode, par exemple à gauche et pour la cathode à droite) afin de pouvoir connecter le panneau à une alimentation électrique extérieure);
- polymérisation de la colle conductrice dans une étuve;
- feuilletage de la première feuille de verre, d'une feuille d'un matériau intercalaire 108 tel qu'une feuille de PVB (pour Poly Vinyl Butyral), par exemple le PVB RB41 commercialisé par la société Solutia, et d'une seconde feuille de verre 104 (ou second substrat de verre). Le procédé de feuilletage peut par exemple être un procédé classique de précollage en calandre suivi d'un collage en autoclave ou bien de précollage en sac et de collage en autoclave.

Nous décrivons ci-après l'étape de réalisation du circuit électrique (ou motif conducteur) à partir de la couche conductrice transparente 103 par patterning de la couche conductrice transparente.

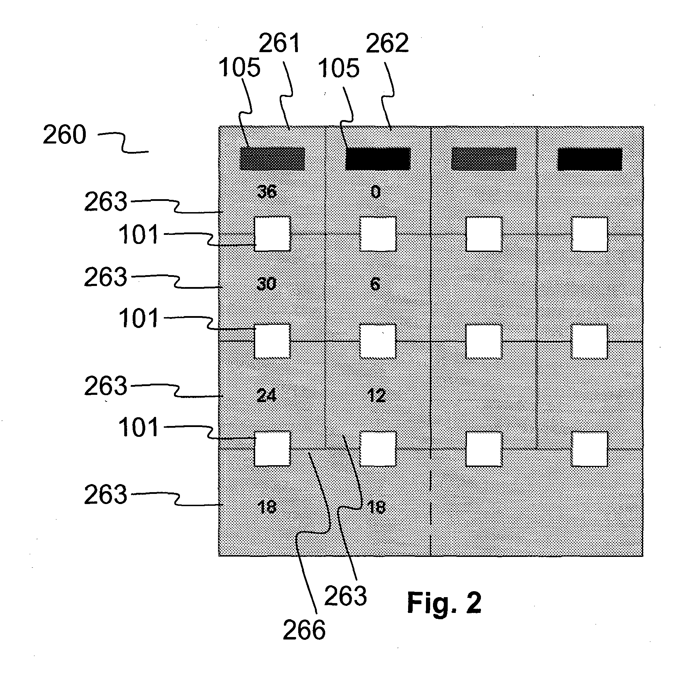

La figure 2 représente un circuit électrique 260 d'alimentation des LEDs
101 classique tel que décrit dans la demande de brevet n° WO2009003525A1 et notamment dans sa figure 2 de cette demande.

Le circuit électrique d'alimentation 260 des LEDs 201 comprend un motif conducteur muni d'une première colonne 261 et d'une deuxième colonne 262 adjacentes l'une à l'autre, et comprenant une série de domaines conducteurs 263 mutuellement isolés électriquement grâce par exemple à des lignes isolantes 266.

Le premier domaine conducteur 263 de chaque colonne comprend un connecteur 105 relié électriquement à une alimentation électrique extérieure (non représentée). Comme représenté sur la figure 2, les premier, second, troisième et quatrième domaines conducteurs de la première colonne 261 sont respectivement polarisés à des potentiels de 36V, 30V, 24V et 18V et les premier, second, troisième et quatrième domaines conducteurs de la seconde colonne 262 sont respectivement polarisés à des potentiels de 0V, 6V, 12V et 18V. Ainsi, dans le présent exemple, chaque LED 101 est alimenté avec une tension de 6V.

Une série de diodes électroluminescentes (LEDs) 101 ayant chacune une première et une seconde plage de contact sont commandées par l'intermédiaire de la série de domaines conducteurs 263 du motif conducteur.

Pour chaque LED, la première plage de contact de la LED est connectée à un premier domaine conducteur 263 de la série et la seconde plage de contact de la LED est connectée à un second domaine conducteur 263 de la série. Pour chaque LED, les premier et second domaines conducteurs sont situés dans une même colonne, la LED constituant ainsi un pont entre les premier et second domaines conducteurs 263.

Les inventeurs ont identifié la loi empirique suivante qui permet de déterminer l'influence de la différence de potentiel maximale entre deux points de part et d'autre d'une ligne isolante du circuit (inversement proportionnelle à la durée de vie) et de la température (liée exponentiellement à la durée de vie) sur la durée de vie du panneau de verre feuilleté comprenant le circuit électrique d'alimentation de la figure 2 :
durée de vie 2 / durée de vie 1 = tension1/tension2 * exp(0,059*(température1-température2))

Cette loi permet de comparer, pour un intercalaire thermoplastique donné, les durées de vie dans 2 situations de température et de tension auprès d'une ligne isolante laser (ou ligne laser) :
- tension i représente la différence de potentiel entre les deux zones séparées par une ligne laser dans la condition i ;
- température i représente la température au niveau de la ligne laser dans la condition i ;
- la durée de vie i représente la durée après laquelle la décoloration brunâtre est observée dans la condition i ;

Cette loi permet de définir des tests accélérés (hautes différences de potentiel, par exemple 60V, et hautes températures, par exemple 80°C) afin de déterminer la durée de vie estimée dans des conditions d'application « normales » (par exemple 4V et 35°C).

Cette loi est valable pour tout panneau de verre feuilleté à intercalaire(s) thermoplastique(s) dont au moins une des feuilles de verre est recouverte, sur sa surface interne au panneau en contact avec l'intercalaire(s) thermoplastique(s), d'un circuit électrique formé par une couche conductrice comprenant au moins deux zones ZA et ZB séparées par une zone isolante ZI électrique réalisée par attaque sélective sous la forme d'une ligne isolante dont l'épaisseur est comprise entre 1 micron et 1000 microns, la zone ZA étant alimentée au moins en deux points P1 et P2 avec deux potentiels V1 et V2 et la zone ZB étant placée à un potentiel V3 au moins en une portion PZB de ZB à la frontière avec ZI.

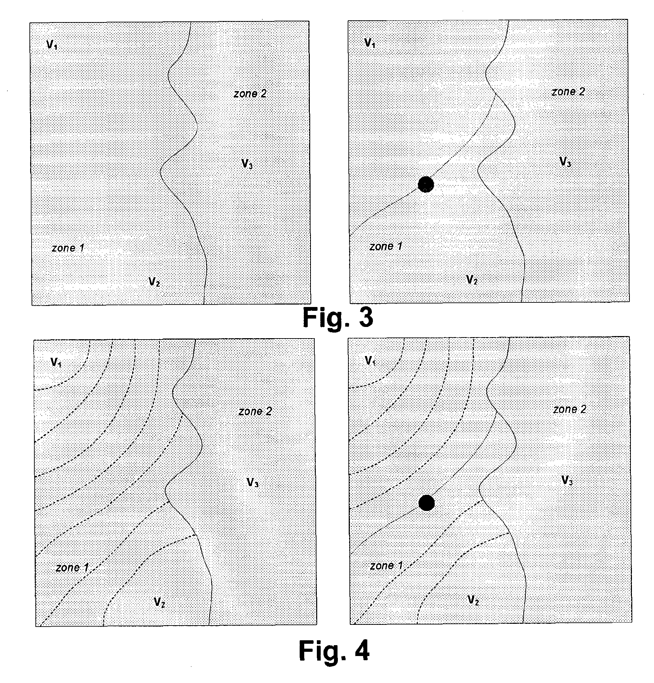

On peut généraliser le problème en se mettant dans le cas de la figure 3. Cette figure 3 montre une réalisation comprenant 2 zones contiguës de couche conductrice (« zone 1 » et « zone 2 ») séparées par une ligne isolante, dont une des deux zones conductrices est à potentiel constant V3 (dans le cas où elle n'est pas à potentiel constant, on peut considérer le potentiel moyen de la zone en première approximation). Deux potentiels différents V1 et V2 (on suppose V1 < V2) sont appliqués en deux points, généralement près des bords de la zone 1, créant le passage d'un courant dans la couche conductrice séparant ces deux points. Les points situés entre les points à V1 et V2 prennent alors une tension intermédiaire entre V1 et V2. Eventuellement (cas de la figure de droite), un composant discret (LEDs, résistance, OLED, capteur, cellule solaire...) peut être présent dans la zone 1, cette zone étant alors séparée, par l'absence de conductrice (réalisée par exemple par laser) en 2 électrodes.

Suite au passage de courant entre les points V1 et V2, des équipotentielles peuvent être tracées (en discontinu sur la figure 4), correspondant à différents potentiels intermédiaires entre V1 et V2. S'il n'y pas de composants électroniques (cas de la figure de gauche), l'ensemble des potentiels dans la zone 1 forme un continuum [V1 V2]. Dans le cas de la présence d'un composant électronique, l'ensemble des potentiels forme deux continuum [V1 V-] et [V+ V2], V- et V+ représentant les tensions aux bornes du composant électronique.

Suivant les valeurs de V1, V2 et V3, l'intercalaire (PVB ou autres) peut être soumis à l'interface des deux zones à des champs électriques importants, qui causeront la diffusion d'ions de l'intercalaire dans la couche et le défaut de décoloration brunâtre. L'invention comprend ici la création des chemins électriques additionnels, en se basant sur la disponibilité de différentes tensions.

Désignons Vx le potentiel présent dans la zone 1 tel que la différence V3-Vx est minimale (en valeur absolue). Si V3<V1, alors Vx=V1. Si V3>V2, alors Vx=V2. Si V1<Vx<V2, il y a différentes possibilités. Dans le cas de l'absence de composants électroniques, Vx=V3; dans le cas de la présence de composant électronique, Si V3 < V- ou V3>V+, Vx=V3 ; si V- < V3 < V+ : Vx = V- si abs(V3-V-)< =abs(V3-V+) et Vx = V+ si abs(V3-V-)>abs(V3-V+).

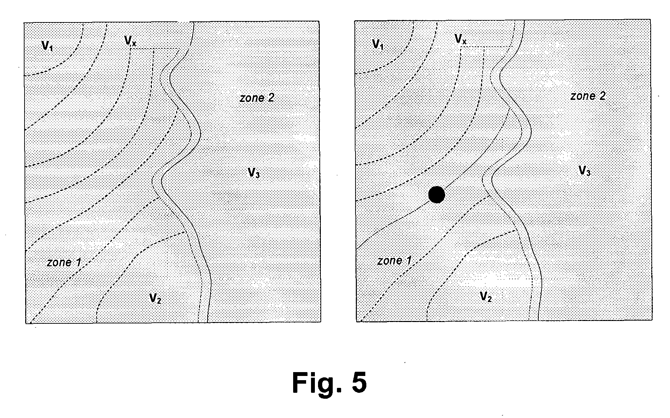

Tel qu'illustré par la figure 5, le procédé comprend une étape de choix, parmi les points de l'équipotentielle V=Vx, de celui qui est le plus proche de la zone de séparation entre V1 et V2, et de créer dans la zone 1, un « chemin d'amenée de potentiel » (cf de ce point vers la jonction entre la zone 1 et la zone 2). Ces « chemins d'amenées de potentiel » sont des « culs de sac » pour le courant et ne sont donc parcourus par aucun courant, ce qui assure que le potentiel de chacun des points de cette zone possède le même potentiel qu'à l'entrée du « cul de sac ».

On a alors affaire à une nouvelle typologie des zones 1 et 2 et la procédure ci-dessus peut être réitérée.

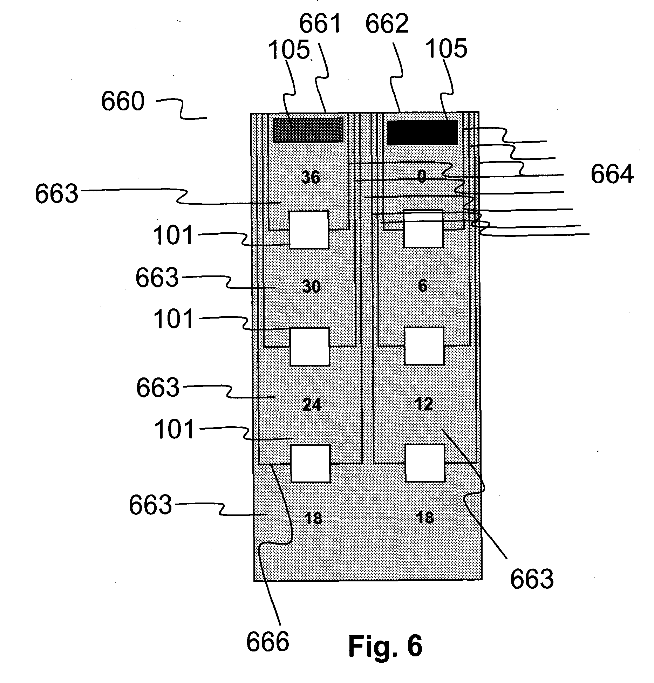

Nous allons maintenant illustrer le mode de réalisation de l'invention par un exemple. On se place maintenant dans un mode de réalisation conforme à l'invention selon lequel un motif élémentaire 660 du circuit électrique d'alimentation est représenté sur la figure 6.

Dans le cas de la figure 6, le patterning électrique du circuit de la figure 2 a été modifié (sans toutefois modifier la position des LEDs 101 et donc l'effet visuel produit par le panneau) au niveau des première 661 et seconde 662 colonnes de domaines conducteurs 663 (mutuellement isolés électriquement grâce à des lignes isolantes 666) afin d'ajouter des circuits « d'amenée de potentiel » (ou zones tampon conductrices) 664. Dans le cadre de ce mode de réalisation de l'invention des circuits « retours »(ou zones tampon conductrices) 664 sont réalisés
dans le patterning laser, afin que chaque ligne laser ne soit soumise au maximum qu'à la différence de potentielle nécessaire pour alimenter une LED, soit dans le présent exemple 6V.

Au final, la différence de potentiel maximale auprès d'une ligne laser est donc de 6V (4V dus à la LED + 2V dus aux pertes ohmiques dans la couche conductrice), et la durée de vie (durée avant apparition des décolorations brunâtres) est alors, comme dans le cas de la Figure 1, de 3 ans dans le cas d'une utilisation à 50mA des LEDs (correspondant à 40°C près de la diode lorsque le panneau est dans une ambiance de 25°C), avec du PVB RB41 du fournisseur Solutia.

Des tests confirmant cette théorie ont été réalisés, notamment le suivant:
Des échantillons, semblables à ceux des figures 2 (sans retours) et 7 (avec retours) ont été réalisés, en utilisant du PVB RB41 du fournisseur Solutia, une couche conductrice Planibel G de AGC Glass Europe et des LEDs, par exemple la type Rigel du fournisseur Nichia.

Les deux échantillons étaient alimentés sous 40V dans une étuve avec une température ambiante de 80°C ; des colorations brunâtres sont apparues sur les échantillons semblables à la figure 2 après 24 heures, et ce près des électrodes ; au niveau où la différence de potentiel entre deux zones contiguës est la plus Importante (40V).

Dans le cas du circuit d'alimentation classique de la figure 2, la différence de potentiel maximale (qui correspond au champ électrique maximal) vue par une ligne laser est de l'ordre de 36V (somme des différences de potentiel nécessaires pour alimenter les LEDs ainsi que des pertes résistives dans la couche conductrice). Les lignes laser sont donc soumises à des tensions 6 fois plus importantes que dans le cas du circuit de la figure 6, ce qui réduit (cf. loi d'accélération précitée) la durée de vie d'un facteur 6, soit 6 mois (en utilisation continue) dans le cas précité dans le cas d'une utilisation à 50mA des LEDs (correspondant à 40°C près de la diode lorsque le panneau est dans une ambiance de 25°C), avec du PVB RB41 du fournisseur Solutia.

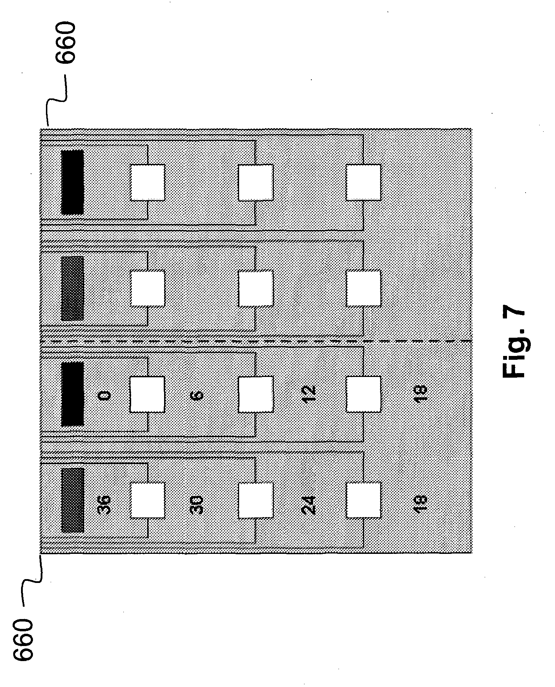

Pour les échantillons comprenant le circuit de la figure 7 (comprenant deux fois le motif élémentaire 660 représenté sur la figure 6), avec les circuits électriques « retour » 664, l'apparition brunâtre est apparue progressivement après 120 heures et 192 heures, ce qui est 5 à 8 fois meilleur que dans le cas précédent et qui peut s'expliquer par le fait que la différence de potentiel auprès d'une ligne laser est de l'ordre de 5 à 8 fois plus faible (environ 6V contre 40V). De plus, la décoloration brunâtre est apparue auprès de chacune des lignes laser environ au même moment, ce qui peut s'expliquer par le fait que, grâce aux circuits retour, chaque ligne laser subit environ le même potentiel.

## Revendications

1. Procédé d'alimentation électrique d'un panneau comprenant :
- un premier substrat en verre (102) pourvu d'un motif conducteur (660) fait d'un matériau optiquement transparent et électriquement conducteur, le motif conducteur étant muni d'une première (661) et d'une deuxième (662) colonne adjacentes l'une à l'autre, et comprenant une série de domaines conducteurs (663) mutuellement isolés électriquement, dans lequel le motif conducteur est tel qu'un premier et un second domaine conducteur sont situés dans la première colonne et un domaine conducteur supplémentaire est arrangé dans la deuxième colonne adjacent au premier domaine conducteur, ,
- au moins une zone tampon conductrice (664) étant présente entre ledit premier domaine conducteur et ledit domaine conducteur supplémentaire, ladite zone tampon étant électriquement isolée dudit premier domaine conducteur et dudit domaine conducteur supplémentaire, **caractérisé en ce que** le domaine conducteur supplémentaire est à un potentiel plus bas que le second domaine conducteur, le second domaine conducteur étant lui-même en opération à un potentiel plus bas que le premier domaine conducteur, et **en ce que** la zone tampon conductrice est en opération à un potentiel intermédiaire compris entre le potentiel du premier domaine conducteur et le potentiel du domaine conducteur supplémentaire.

2. Procédé selon la revendication 1 **caractérisé en ce que** le panneau comprend en outre une série de diodes électroluminescentes (101) ayant chacune une première et une seconde plage de contact et étant attachées au panneau de verre et commandées par l'intermédiaire de la série de domaines conducteurs du motif conducteur, la première plage de contact d'une diode électroluminescente étant connectée au premier domaine conducteur de la série et la seconde plage de contact de ladite diode électroluminescente étant connectée au second domaine conducteur de la série, la diode électroluminescente constituant ainsi un pont entre le premier domaine conducteur et le second domaine conducteur.

3. Procédé selon l'une quelconque des revendications 1 et 2, **caractérisé en ce que** la zone tampon (664) fait partie du second domaine conducteur.

4. Procédé selon l'une quelconque des revendications 1 à 3, **caractérisé en ce que** une première et une seconde zone tampon conductrice (664) sont présentes entre le premier domaine conducteur et le domaine conducteur additionnelle.

5. Procédé tel que revendiqué dans n'importe laquelle des revendications précédentes, **caractérisé en ce qu'**une différence de voltage entre toute paire de domaines conducteurs adjacents dans le motif est dans une plage prédéfinie.

6. Procédé selon la revendication 5, **caractérisé en ce que** ladite différence de voltage est constante.

7. Procédé selon l'une quelconque des revendications 1 à 6, dans lequel la série de domaines conducteurs s'étend de la première colonne à la seconde colonne, de telle manière que le conducteur supplémentaire fait partie de ladite série.

8. Procédé selon l'une quelconque des revendications précédentes, **caractérisé en ce qu'**un diélectrique est présent au dessus du motif conducteur, par ce fait définissant une capacité en parallèle à au moins une diode électroluminescente (101) .

9. Procédé selon l'une quelconque des revendications précédentes, **caractérisé en ce que** les domaines conducteurs (663) sont mutuellement isolés au moyen de lignes de largeur constante (666).

10. Procédé selon l'une quelconque des revendications précédentes, **caractérisé en ce que** le panneau est un panneau de verre feuilleté obtenu par feuilletage du premier substrat (102) et d'un second substrat de verre (104) via au moins un intercalaire thermoplastique (108) de tel sorte que les diodes électroluminescentes sont encapsulées dans ledit au moins un intercalaire thermoplastique (108).

## Patentansprüche

1. Verfahren zur Stromversorgung eines Panels, das enthält:
- ein erstes Glassubstrat (102), das mit einem aus einem optisch transparenten und elektrisch leitenden Material bestehenden Leiterbahnmuster (660) versehen ist, wobei das Leiterbahnmuster mit einer ersten (661) und einer zweiten (662) einander benachbarten Spalte ausgestattet ist und eine Reihe von elektrisch voneinander isolierten Leiterfeldern (663) enthält, wobei das Leiterbahnmuster so ist, dass ein erstes und ein zweites Leiterfeld sich in der ersten Spalte befinden und ein zusätzliches Leiterfeld in der zweiten Spalte dem ersten Leiterfeld benachbart angeordnet ist,
- wobei mindestens eine leitende Pufferzone (664) zwischen dem ersten Leiterfeld und dem zusätzlichen Leiterfeld vorhanden ist, wobei die Pufferzone vom ersten Leiterfeld und vom zusätzlichen Leiterfeld elektrisch isoliert ist, **dadurch gekennzeichnet, dass** das zusätzliche Leiterfeld auf einem niedrigeren Potential ist als das zweite Leiterfeld, wobei das zweite Leiterfeld selbst im Betrieb auf einem niedrigeren Potential ist als das erste Leiterfeld, und dass die leitende Pufferzone im Betrieb auf einem Zwischenpotential ist, das zwischen dem Potential des ersten Leiterfelds und dem Potential des zusätzlichen Leiterfelds liegt.

2. Verfahren nach Anspruch 1, **dadurch gekennzeichnet, dass** das Panel außerdem eine Reihe von Elektrolumineszenzdioden (101) enthält, die je einen ersten und einen zweiten Kontaktbereich haben und am Glaspanel befestigt sind und mittels der Reihe von Leiterfeldern des Leiterbahnmusters gesteuert werden, wobei der erste Kontaktbereich einer Elektrolumineszenzdiode mit dem ersten Leiterfeld der Reihe und der zweite Kontaktbereich der Elektrolumineszenzdiode mit dem zweiten Leiterfeld der Reihe verbunden ist, wobei die Elektrolumineszenzdiode so eine Brücke zwischen dem ersten Leiterfeld und dem zweiten Leiterfeld bildet.

3. Verfahren nach einem der Ansprüche 1 und 2, **dadurch gekennzeichnet, dass** die Pufferzone (664) Teil des zweiten Leiterfelds ist.

4. Verfahren nach einem der Ansprüche 1 bis 3, **dadurch gekennzeichnet, dass** eine erste und eine zweite leitende Pufferzone (664) zwischen dem ersten Leiterfeld und dem zusätzlichen Leiterfeld vorhanden sind.

5. Verfahren nach einem der vorhergehenden Ansprüche, **dadurch gekennzeichnet, dass** ein Spannungsunterschied zwischen jedem Paar von im Muster benachbarten Leiterfeldern sich in einem vordefinierten Bereich befindet.

6. Verfahren nach Anspruch 5, **dadurch gekennzeichnet, dass** der Spannungsunterschied konstant ist.

7. Verfahren nach einem der Ansprüche 1 bis 6, wobei die Reihe von Leiterfeldern sich so von der ersten Spalte zur zweiten Spalte erstreckt, dass der zusätzliche Leiter Teil der Reihe ist.

8. Verfahren nach einem der vorhergehenden Ansprüche, **dadurch gekennzeichnet, dass** ein Dielektrikum über dem Leiterbahnmuster vorhanden ist, wodurch eine Kapazität parallel zu mindestens einer Elektrolumineszenzdiode (101) definiert wird.

9. Verfahren nach einem der vorhergehenden Ansprüche, **dadurch gekennzeichnet, dass** die Leiterfelder (663) mit Hilfe von Linien konstanter Breite (666) voneinander isoliert sind.

10. Verfahren nach einem der vorhergehenden Ansprüche, **dadurch gekennzeichnet, dass** das Panel ein Panel aus Verbundglas ist, das durch Laminieren des ersten Substrats (102) und eines zweiten Glassubstrats (104) über mindestens eine thermoplastische Zwischenlage (108) erhalten wird, so dass die Elektrolumineszenzdioden in der mindestens einen thermoplastischen Zwischenlage (108) eingekapselt sind.

## Claims

1. Process for electrical supply to a panel comprising:
• a first glass substrate (102) provided with a conductive pattern (660) made from an optically transparent and electrically conductive material, wherein the conductive pattern is provided with a first (661) and a second (662) column adjacent to one another, and comprising a series of conductive regions (663) electrically insulated from one another, in which substrate the conductive pattern is such that a first and a second conductive region are located in the first column and an additional conductive region is arranged in the second column adjacent to the first conductive region;
• at least one conductive buffer zone (664) provided between said first conductive region and said additional conductive region, wherein said buffer zone is electrically insulated from said first conductive region and said additional conductive region,
**characterised in that** the additional conductive region is at a lower potential than the second conductive region, wherein the second conductive region is itself operative at a lower potential than the first conductive region, and **in that** the conductive buffer zone is operative at an intermediate potential between the potential of the first conductive region and the potential of the additional conductive region.

2. Process according to claim 1, **characterised in that** the panel additionally comprises a series of light-emitting diodes (101), which each have a first and a second contact area attached to the glass panel and controlled by means of the series of conductive regions of the conductive pattern, wherein the first contact area of a light-emitting diode is connected to the first conductive region of the series and the second contact area of said light-emitting diode is connected to the second conductive region of the series, the light-emitting diode thus forming a bridge between the first conductive region and the second conductive region.

3. Process according to any one of claims 1 and 2, **characterised in that** the buffer zone (664) forms part of the second conductive region.

4. Process according to any one of claims 1 to 3, **characterised in that** a first and a second conductive buffer zone (664) are provided between the first conductive region and the additional conductive region.

5. Process as claimed in any one of the preceding claims, **characterised in that** a voltage difference between any pair of adjacent conductive regions in the pattern is in a predefined range.

6. Process according to claim 5, **characterised in that** said voltage difference is constant.

7. Process according to any one of claims 1 to 6, in which the series of conductive regions extends from the first column to the second column in such a manner that the additional conductive region forms part of said series.

8. Process according to any one of the preceding claims, **characterised in that** a dielectric is present on top of the conductive pattern, thus defining a capacity comparable to at least one light-emitting diode (101).

9. Process according to any one of the preceding claims, **characterised in that** the conductive regions (663) are insulated from one another by means of lines of constant width (666).

10. Process according to any one of the preceding claims, **characterised in that** the panel is a panel of laminated glass obtained by laminating the first substrate (102) and a second substrate (104) of glass by means of at least one thermoplastic interlayer (108) such that the light-emitting diodes are encapsulated in said at least one thermoplastic interlayer (108).
